# EUROPEAN PATENT SPECIFICATION

(11) **EP 3 750 959 B1**
(45) Date of publication and mention of the grant of the patent: **03.06.2026**
(21) Application number: 19751297.3
(22) Date of filing: 04.02.2019
(51) Int. Cl.: F16C 17/04, F16F 15/12, F16C 33/20, B29B 9/14, F16C 19/52, C08K 7/14, C08K 3/04, F16F 15/129, B29B 9/16, C08K 7/02, C08L 77/06, B29K 77/00, B29K 105/06, B29B 9/06, B29B 7/00, F16C 17/02, C08G 69/40, B29L 31/16

(54) **SLIDING MEMBER**
GLEITELEMENT
ÉLÉMENT COULISSANT

(30) Priority: 06.02.2018 JP 2018019077
(43) Date of publication of application: 16.12.2020
(73) Proprietor: Otsuka Chemical Co., Ltd., Osaka-shi, Osaka 540-0021 (JP)
(72) Inventor: MARUOKA, Toshikazu, Tokushima-shi, Tokushima 771-0193 (JP)
(74) Representative: Ter Meer Steinmeister & Partner
(86) International application number: PCT/JP2019/003788
(87) International publication number: WO 2019/156010

(56) References cited:
- EP-A1- 0 803 752
- EP-A1- 1 842 879
- EP-A1- 2 963 166
- EP-A1- 3 162 855
- WO-A1-2012/026413
- JP-A- 2001 011 202
- JP-A- 2002 069 294
- JP-A- 2002 069 294
- JP-A- 2005 112 703
- JP-A- 2012 153 798
- JP-A- 2013 064 420
- JP-A- 2016 204 490
- JP-A- H0 266 365
- JP-A- H04 142 366
- JP-A- H08 188 712
- JP-A- H08 188 712

## Description

### Technical Field

The present invention relates to sliding members.

### Background Art

A torque fluctuation absorber for a vehicle, such as a motor vehicle, is a device disposed in a power transmission path between a power source, such as an engine or an electric motor, and a gearbox to absorb (reduce or suppress) torque fluctuations between the power source and the gearbox. There is a torque fluctuation absorber that includes, as its basic structural components, a damper portion that absorbs torque fluctuations by a spring force, a hysteresis portion that absorbs (suppresses) torque fluctuations by hysteresis torque due to friction, and a limiter portion that causes slippage when the damper portion and the hysteresis portion become unable to absorb the torsion of a rotating shaft. In the hysteresis portion, a thrust member (such as a bush or a friction member) provided between two rotating members in an axial direction is pressed against one of the rotating members by a disc spring and, upon occurrence of torsion between the two rotating members, hysteresis torque due to a frictional force is produced between the thrust member and the one rotating member, thus absorbing torque fluctuations. Techniques disclosed in Patent Literatures 1 and 2 are known as conventional techniques for the torque fluctuation absorber just described.

### Citation List

### Patent Literature

Patent Literature 1: JP-A-2012-193773
Patent Literature 2: JP-A-2014-62623

EP 3 162 855 A1 essentially discloses a member molded from a resin composition, the resin composition containing: a polyamide resin ; a fibrous reinforcing material; and a polyamide-based elastomer, wherein a content of the fibrous reinforcing material in a total amount of 100% by mass of the resin composition is 5% by mass to 20% by mass, and a content of the polyamide-based elastomer in a total amount of 100% by mass of the resin composition is 3% by mass to 10% by mass.

EP 2 963 166 A1 essentially discloses a member from a resin composition the resin composition containing: a polyamide resin ; a fibrous reinforcing material; and a polyamide-based elastomer,wherein the fibrous reinforcing material has a tensile modulus of elasticity of 190 GPa to 300 GPa, wherein the fibrous reinforcing material consists of polyacrylonitrile-based carbon fibers and a content of the polyamide-based elastomer in a total amount of 100% by mass of the resin composition is 3% by mass to 10% by mass.

JP 2012 153798 A essentially discloses a member molded from a resin composition, the resin composition containing: a polyamide resin; a fibrous reinforcing material; and a polyamide-based elastomer,wherein a content of the fibrous reinforcing material in a total amount of 100% by mass of the resin composition is 5% by mass to 20% by mass [par. 28], and a content of the polyamide-based elastomer in a total amount of 100% by mass of the resin composition is 3% by mass to 10% by mass. JPH08188712A discloses a sliding member molded from a resin composition, the resin composition containing: a polyamide resin and a polyamide-based elastomer.

JP2002069294 discloses a sliding member molded from a resin composition, the resin composition containing: a polyamide resin; a fibrous reinforcing material; and a polyamide-based elastomer at a content of the polyamide-based elastomer in a total amount of 100% by mass of the resin composition is 3% by mass to 10% by mass.

JP2013064420A discloses a sliding member molded from a resin composition, the resin composition containing: a polyamide resin; a fibrous reinforcing material at a content of the fibrous reinforcing material in a total amount of 100% by mass of the resin composition is 5% by mass to 20% by mass.

### Summary of Invention

### Technical Problem

Such thrust members as described above are often used as those obtained by injection molding a thermoplastic resin for the purposes of cost reduction and weight saving. Furthermore, thrust members are required, as frictional properties during sliding, to be less wearing (have wear resistance) and have a high, stable coefficient of friction (µ). However, thrust members made of thermoplastic resin have poor wear resistance and unstable coefficients of friction and are therefore used with their sliding surfaces subjected to a surface treatment (such as plating or metallic painting).

The present invention has been made in view of the foregoing circumstances and, therefore, has a major object of providing a sliding member that, during sliding, exhibits excellent wear resistance and has a stable, high coefficient of friction without having to subject the sliding surface to a surface treatment.

### Solution to Problem

The invention is defined by the features of the independent claim 1. Further embodiments of the invention are defined by the dependent claims.

### Advantageous Effects of Invention

The present invention enables provision of a sliding member that, during sliding, exhibits excellent wear resistance and has a stable, high coefficient of friction without having to subject the sliding surface to a surface treatment.

### Description of Embodiments

Hereinafter, a description will be given of an example of a preferred embodiment for working of the present invention. However, the following embodiment is simply illustrative. The present invention is not at all limited by the following

### embodiment.

A sliding member according to the present invention is a sliding member molded from a resin composition, wherein the resin composition contains a polyamide resin, a fibrous reinforcing material having a tensile modulus of elasticity of 190 GPa to 300 GPa, and a polyamide-based elastomer.

Since the sliding member according to the present invention has the above structure, it is a sliding member that, during sliding, exhibits excellent wear resistance and has a stable, high coefficient of friction without having to subject the sliding surface to a surface treatment. Particularly, the sliding member according to the present invention has a coefficient of friction of 0.40 or more against carbon steel S45C. Since, as just described, the sliding member according to the present invention has a coefficient of friction of 0.40 or more against carbon steel S45C, it can be suitably used as a thrust member for a torque fluctuation absorber. From the perspective of further increasing the stability, the coefficient of friction is preferably 1.00 or less and more preferably 0.80 or less. The above coefficient of friction is an average value of coefficients of friction obtained by using a ring-shaped molded body (a hollow cylinder with an outer diameter of 25.6 mm, an inner diameter of 20 mm, and a height of 15 mm) produced by injection molding a resin composition to be described later and a ring of carbon steel S45C (a hollow cylinder with an outer diameter of 25.6 mm, an inner diameter of 20 mm, and a height of 15 mm) to make measurements during a friction and wear test complying with the A method of JIS K 7218 under conditions of a surface pressure of 0.8 MPa and a peripheral velocity of 0.16 m/s. The mark S45C is a material mark representing carbon steel for machine structural use in JIS.

A description will be given below of components and so on of the sliding member according to the present invention.

### <Resin Composition>

The resin composition for use in the present invention contains a polyamide resin, a fibrous reinforcing material having a tensile modulus of elasticity of 190 GPa to 300 GPa, and a polyamide-based elastomer and may further contain other additives as necessary.

### (Polyamide Resin)

The polyamide resin for use in the present invention is a polymer having an amide bond (-NH-C(=O)-) in a main chain and containing a structural unit derived from a monomer component represented by an aminocarboxylic acid, a diamine or a dicarboxylic acid, all of which will be described below. The polyamide resin may be composed of a single type of structural unit (such as a polymer of an aminocarboxylic acid) or may be composed of a plurality of types of structural units (such as a copolymer of a diamine and a dicarboxylic acid or a copolymer of a diamine, a dicarboxylic acid, and an aminocarboxylic acid). In the case of a copolymer composed of a plurality of types of structural units, its ratio of copolymerization, copolymerization form (such as a random copolymer, a block copolymer or an alternating copolymer) and other copolymerization characteristics can be arbitrarily selected.

Examples of the aminocarboxylic acid include: aliphatic ω-aminocarboxylic acids having 5 to 20 carbon atoms, including 6-aminocaproic acid, 7-aminoheptanoic acid, 8-aminooctanoic acid, 9-aminononanoic acid, 10-amiondecanoic acid, 11-aminoundecanoic acid, and 12-aminododecanoic acid; and aromatic diamines, including p-aminobenzoic acid and p-aminomethylbenzoic acid. Alternatively, cyclic lactams corresponding to the above aliphatic ω-aminocarboxylic acids may be used. These components may be used singly or in combination of two or more of them.

Examples of the diamine include: aliphatic diamines, including ethylenediamine, trimethylenediamine, tetramethylenediamine, pentamethylenediamine, hexamethylenediamine, 1,7-diaminoheptane, 1,8-diaminooctane, 1,9-diaminononane, 1,10-diaminodecane, 1,11-diaminoundecane, 1,12-diaminododecane, 2-methyl-1,5-diaminopentane, 3-methyl-1,5-diaminopentane, and 2-ethyltetramethylene diamine; alicyclic diamines, including 1,2-diaminocyclohexane, 1,3-diaminocyclohexane, 1,4-diaminocyclohexane, 1,3-bis(aminomethyl)cyclohexane, bis(aminomethyl)cyclohexane, bis(4-aminocyclohexyl)methane, 4,4'-diamino-3,3'-dimethyldicyclohexylmethane, isophoronediamine, and piperazine; and aromatic diamines, including p-phenylenediamine, o-phenylenediamine, m-phenylenediamine, p-xylenediamine, o-xylenediamine, and m-xylenediamine. These components may be used singly or in combination of two or more of them.

Examples of the dicarboxylic acid include: aliphatic dicarboxylic acids, including succinic acid, glutaric acid, adipic acid, pimelic acid, suberic acid, azelaic acid, sebacic acid, 1,9-nonanedicarboxylic acid, 1,10-decanedicarboxylic acid, and 1,11-undecanedicarboxylic acid; alicyclic dicarboxylic acids, including 1,2-cyclohexanedicarboxylic acid, 1,3-cyclohexanedicarboxylic acid, and 1,4-cyclohexanedicarboxylic acid; and aromatic dicarboxylic acids, including terephthalic acid, isophthalic acid, phthalic acid, 2-methylterephthalic acid, and naphthalenedicarboxylic acid. These components may be used singly or in combination of two or more of them.

Specific examples of the polyamide resin include aliphatic polyamide resins, including polyamide 6 (a polymer of 6-aminocaproic acid), polyamide 66 (a copolymer of hexamethylenediamine and adipic acid), polyamide 11 (a polymer of 11-aminoundecanoic acid), polyamide 12 (a polymer of 12-aminododecanoic acid), polyamide 46 (a copolymer of tetramethylenediamine and adipic acid), polyamide 6/66 copolymer (a copolymer of 6-aminocaproic acid, hexamethylenediamine, and adipic acid), and polyamide 6/12 copolymer (a copolymer of 6-aminocaproic acid and 12-aminododecanoic acid); and semi-aromatic polyamide resins, including polyamide MXD6 (a copolymer of m-xylenediamine and adipic acid), polyamide MXD10 (a copolymer of m-xylenediamine and sebacic acid), polyamide 6T (a copolymer of hexamethylenediamine and terephthalic acid), polyamide 9T (a copolymer of 1, 9-diaminononane and terephthalic acid), polyamide 10T (a copolymer of 1,10-diaminodecane and terephthalic acid), and polyamide 6T/66 copolymer (a copolymer of hexamethylenediamine, terephthalic acid, and adipic acid). These components may be used singly or in combination of two or more of them.

In the present invention, the semi-aromatic polyamide resin means a polyamide resin containing, as structural units of the polyamide resin, a structural unit derived from an aliphatic monomer and a structural unit derived from an aromatic monomer. Examples of the aliphatic monomer include, among the above-mentioned monomer components, aliphatic dicarboxylic acids, aliphatic diamines, alicyclic diamines, aliphatic ω-aminocarboxylic acids, and alicyclic dicarboxylic acids. Examples of the aromatic monomer include, among the above-mentioned monomer components, aromatic diamines, aromatic dicarboxylic acids, and aromatic aminocarboxylic acids.

The polyamide resin for use in the present invention preferably has a melting point of 150°C or higher for the purpose of further reducing deformation, discoloration, and so on. Furthermore, for the purpose of further reducing thermal decomposition of the polyamide resin during melting processing, including extrusion and molding, the melting point of the polyamide resin is preferably not higher than 350°C and more preferably not higher than 330°C. The melting point can be measured in conformity with JIS-K 7121.

There is no particular limitation as to the form of the polyamide resin so long as it can be melt-kneaded. For example, any one of powdered, granular, and pelletized forms can be used.

The content of the polyamide resin in the resin composition is, in a total amount of 100% by mass of the resin composition, preferably 30% by mass to 97% by mass, more preferably 42% by mass to 94% by mass, and still more preferably 65% by mass to 91% by mass.

### (Fibrous Reinforcing Material)

The fibrous reinforcing material for use in the present invention has a tensile modulus of elasticity of 190 GPa to 300 GPa. If the tensile modulus of elasticity of the fibrous reinforcing material is too small, the fibrous reinforcing material has a small effect of reinforcing the sliding interface, so that excessive abrasion powder is produced and the coefficient of friction thus may become unstable. On the other hand, if the tensile modulus of elasticity of the fibrous reinforcing material is too large, detached portions at the sliding interface may create large resistance. Therefore, it can be considered that, within the above range of tensile moduli of elasticity, the fibrous reinforcing material is moderately abraded and the coefficient of friction is thus stable at high values. The tensile modulus of elasticity of the fibrous reinforcing material refers to a value measured in conformity with the A method of JIS R 7606 (2000).

In accordance with the current invention, PAN-based carbon fibers are being used whereby these types of carbon fibers may be used singly or in combination of two or more.

The average fiber length of the fibrous reinforcing material for use in the present invention is preferably 0.1 mm to 10 mm, more preferably 1 mm to 8 mm, and still more preferably 4 mm to 7 mm. A bundle of reinforcing fibers bound by a sizing agent or the like may be used as the fibrous reinforcing material and the average fiber diameter is preferably 0.5 µm to 30 µm, more preferably 1 µm to 20 µm, and still more preferably 3 µm to 15 µm. Its average aspect ratio ((average fiber length)/(average fiber diameter)) is preferably 5 or more, more preferably 10 or more, still more preferably 20 or more, and particularly preferably 50 or more. With the use of short fibers (chopped fibers) just described as the reinforcing material, a resin composition more balanced between moldability and mechanical properties can be obtained.

The content of the fibrous reinforcing material in the resin composition is, in a total amount of 100% by mass of the resin composition, 5% by mass to 20% by mass. If the content of the fibrous reinforcing material is too small, the reinforcing effect is less likely to be obtained. If the content of the fibrous reinforcing material is large, the wear resistance may decrease.

### (Polyamide-Based Elastomer)

The polyamide-based elastomer for use in the present invention is a thermoplastic elastomer having a polyamide segment as a hard segment and a polyether segment as a soft segment. Examples of the polyamide-based elastomer include: a polyether-ester-amide elastomer in which a hard segment and a soft segment are bonded by an ester bond; and a polyether-amide elastomer in which a hard segment and a soft segment are bonded by an amide bond, and the polyether-amide elastomer is preferred. With the use of the polyamide-based elastomer described above, the coefficient of friction can be stabilized without decreasing the wear resistance.

The polyamide segment is a segment having an amide bond (-NH-C (=O) -) in its main chain and containing a structural unit derived from a monomer component represented by an aminocarboxylic acid, a diamine or a dicarboxylic acid, all of which will be described below. The polyamide segment may be composed of a single type of structural unit (such as a polymer of an aminocarboxylic acid) or may be composed of a plurality of types of structural units (such as a copolymer of a diamine and a dicarboxylic acid or a copolymer of a diamine, a dicarboxylic acid, and an aminocarboxylic acid). In the case of a copolymer composed of a plurality of types of structural units, its ratio of copolymerization, copolymerization form (such as a random copolymer, a block copolymer or an alternating copolymer) and other copolymerization characteristics can be arbitrarily selected.

Examples of the aminocarboxylic acid include aliphatic ω-aminocarboxylic acids having 5 to 20 carbon atoms, including 6-aminocaproic acid, 7-aminoheptanoic acid, 8-aminooctanoic acid, 10-aminodecanoic acid, 11-aminoundecanoic acid, and 12-aminododecanoic acid. Alternatively, cyclic lactams corresponding to these aliphatic ω-aminocarboxylic acids may be used. These components may be used singly or in combination of two or more of them.

Examples of the diamine include: aliphatic diamines having 2 to 20 carbon atoms, including ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, and 3-methylpentamethylenediamine. These components may be used singly or in combination of two or more of them.

Examples of the dicarboxylic acid include: straight-chain aliphatic dicarboxylic acids having 2 to 20 carbon atoms, including oxalic acid, succinic acid, glutaric acid, adipic acid, pimelic acid, suberic acid, azelaic acid, sebacic acid, and dodecanedioic acid; dimerized aliphatic dicarboxylic acids (dimer acids) having 14 to 48 carbon atoms each obtained by dimerizing an unsaturated fatty acid obtained by fractional distillation of triglyceride; their hydrogen additives (hydrogenated dimer acids); alicyclic dicarboxylic acids, such as 1,4-cyclohexanedicarboxylic acid; and aromatic dicarboxylic acids, including terephthalic acid and isophthalic acid.

Of these, the particularly preferred monomer component is 11-aminoundecanoic acid or 12-aminododecanoic acid in view of further increasing the dimensional stability due to low-water absorption, the chemical resistance, and the mechanical properties.

The number average molecular weight of the polyamide segment is preferably 300 to 15000 and, from the perspective of further increasing the flexibility and moldability, more preferably 300 to 6000. Herein, the number average molecular weight is a number average molecular weight (Mn) measured in terms of polystyrene by gel permeation chromatography (GPC).

The polyether segment is a segment having an ether bond (-O-) in its main chain and examples include polyethylene glycol, polypropylene glycol, polytetramethylene ether glycol, and ABA triblock polyether represented by Formula (1) below. These components can be used singly or in combination of two or more. Alternatively, polyether diamine or the like obtained by reacting an end of a polyether with ammonia or the like may be used. The number average molecular weight of the soft segment is preferably 200 to 6000 and more preferably 650 to 2000.

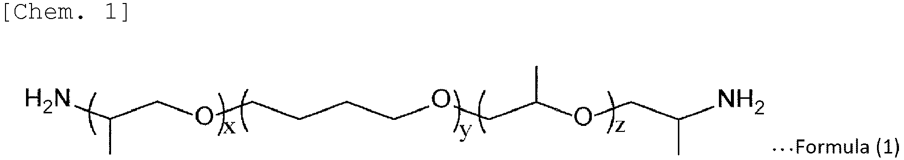

In Formula (1), x represents 1 to 20, y represents 4 to 50, and z represents 1 to 20.

In the above Formula (1), x is an integer from 1 to 20, preferably an integer from 1 to 18, more preferably an integer from 1 to 16, particularly preferably an integer from 1 to 14, and most preferably an integer from 1 to 12. In Formula (1), y is an integer from 4 to 50, preferably an integer from 5 to 45, more preferably an integer from 6 to 40, particularly preferably an integer from 7 to 35, and most preferably an integer from 8 to 30. In Formula (1), z is an integer from 1 to 20, preferably an integer from 1 to 18, more preferably an integer from 1 to 16, particularly preferably an integer from 1 to 14, and most preferably an integer from 1 to 12.

Examples of a combination of the above-described polyamide segment and the above-described polyether segment include combinations of individual polyamide segments cited above and individual polyether segments cited above. Among them, the preferred combinations are a combination of 12-aminododecanoic acid polymer and polyethylene glycol, a combination of 12-aminododecanoic acid polymer and polypropylene glycol, a combination of 12-aminododecanoic acid polymer and polytetramethylene ether glycol, and a combination of 12-aminododecanoic acid polymer and ABA triblock polyether, and the particularly preferred combination is a combination of 12-aminododecanoic acid polycondensation product and ABA triblock polyether.

The ratio (mass ratio) between the polyamide segment and the polyether segment is preferably (polyamide segment)/(polyether segment) = 95/5 to 20/80, more preferably 60/40 to 30/70, and particularly preferably 50/50 to 30/70. If the polyamide segment is less than 20% by mass, the molded body is likely to cause bleed-out. If the polyamide segment is more than 95% by mass, the flexibility tends to be insufficient.

The polyamide-based elastomer preferably has a melting point of 130°C or higher for the purpose of further reducing deformation, discoloration, and so on. Furthermore, for the purpose of further reducing thermal decomposition of the polyamide-based elastomer during melting processing, including extrusion and molding, the melting point of the polyamide-based elastomer is preferably not higher than 320°C and more preferably not higher than 270°C. The melting point can be measured in conformity with JIS-K 7121.

There is no particular limitation as to the form of the polyamide-based elastomer so long as it can be melt-kneaded. For example, any one of powdered, granular, and pelletized forms can be used.

The content of the polyamide-based elastomer in the resin composition is, in a total amount of 100% by mass of the resin composition, 3% by mass to 10% by mass. If the content of the polyamide-based elastomer is too small, the desired effect is less likely to be obtained. If the content of the polyamide-based elastomer is large, the thermal resistance may decrease.

### (Other Additives)

The resin composition for use in the present invention may contain, in addition to the polyamide resin, the fibrous reinforcing material, and the polyamide-based elastomer, non-fibrous titanate compound particles and other additives as necessary.

The non-fibrous titanate compound particles that can be used are metal titanate compound particles containing at least one metal element selected from the group consisting of alkali metals, alkaline earth metals, and earth metals. Examples of the alkali metals include lithium, sodium, potassium, rubidium, cesium, and francium and the preferred alkali metals are lithium, sodium, and potassium. Examples of the alkaline earth metals include beryllium, magnesium, calcium, strontium, barium, and radium and the preferred alkaline earth metals are magnesium and calcium. An example of the earth metals is aluminum.

Specific examples of the metal titanate compound include: metal titanate compounds represented by a composition formula A₂TiₙO₍₂ₙ₊₁₎ where A represents at least one selected from alkali metals and n = 2 to 8; metal titanate compounds represented by Rₓm_{y}Ti_{(2-y)}O₄ where R represents an alkali metal except for lithium, M represents at least one selected from among lithium, magnesium, zinc, nickel, copper, iron, aluminum, gallium, and manganese, x = 0.5 to 1.0, and y = 0.25 to 1.0; lithium potassium titanates represented by K_{0.5 to 0.8}Li_{0.27}Ti_{1.73}O_{3.85 to 3.95}; magnesium potassium titanates represented by K_{0.2 to 0.8}Mg_{0.4}Ti_{1.6}O_{3.7 to 3.95}; and aluminum titanate represented by Al₂TiO₅. Of these, aluminum titanate is preferred.

The particle shape of the metal titanate compound particles that can be used is arbitrary one appropriately selected from among known shapes of metal titanate compound particles so long as they are non-fibrous, such as spherical, platy, bar-like or blocky shape. The shape of the metal titanate compound particles can be analyzed, for example, by observation with a scanning electron microscope.

Fibrous particles as used in the present invention refer to particles having an L/B of 5 or more and an L/T of 5 or more where a length L represents the dimension of the longest side of, among cuboids (circumscribing cuboids) circumscribing the particle, a cuboid having the minimum volume, a breadth B represents the dimension of the second longest side of the cuboid, and a thickness T represents the dimension of the shortest side of the cuboid (i.e., B > T). The length L and the breadth B correspond to the fiber length and the fiber diameter, respectively. Non-fibrous particles refer to particles other than fibrous particles and refer to particles in which L/B is less than 5 where L represents a length which is the longest side of, among cuboids (circumscribing cuboids) circumscribing the particle, a cuboid having the minimum volume, B represents a breadth which is the second longest side of the cuboid, and T represents a thickness which is the shortest side of the cuboid (i.e., B > T).

The average particle diameter of the metal titanate compound particles is preferably more than 5 µm, more preferably more than 50 µm and less than 500 µm, still more preferably more than 100 µm and less than 450 µm, and particularly preferably more than 200 µm and less than 400 µm.

The average particle diameter of the metal titanate compound particles can be measured by the laser diffraction and scattering method and is a particle diameter at a cumulative integrated value of 50% in a particle size distribution measured by the laser diffraction and scattering method (a volume-based 50% cumulative particle diameter), i.e., D₅₀ (a median diameter) . This volume-based 50% cumulative particle diameter (D₅₀) is a particle diameter at a cumulative value of 50% in a cumulative curve of a particle size distribution determined on a volume basis, the cumulative curve assuming the total volume of particles to be 100%, where during accumulation the number of particles is counted from a smaller size side.

The content of the non-fibrous metal titanate compound particles in the resin composition is, in a total amount of 100% by mass of the resin composition, preferably 1% by mass to 10% by mass, more preferably 1% by mass to 8% by mass, and still more preferably 1% by mass to 5% by mass. By adjusting the content of the non-fibrous metal titanate compound particles within the above range, the coefficient of friction of the sliding member can be further increased.

Examples of the other additives include: a colorant, such as carbon black, titanium oxide or other pigments, or dye; a solid lubricant, such as graphite, molybdenum disulfide, tungsten disulfide, boron nitride (BN), polytetrafluoroethylene (PTFE), low-density polyethylene, linear low-density polyethylene, medium-density polyethylene, high-density polyethylene or ultra-high molecular weight polyethylene; a flow modifier; a mold release agent, such as saturated fatty acid ester, unsaturated fatty acid ester or polyolefin-based wax; a heat-transfer agent, such as polyether ester amide or glycerin monostearate; a conductive additive, such as carbon-based conductive additive, metal-based conductive additive, metal oxide-based conductive additive or surfactant; an antistat, such as polyether ester amide or glycerin monostearate; a nucleating agent; an anti-aging agent (antioxidant); a ultraviolet ray absorber, such as benzophenone-based compound, benzotriazole-based compound, hydroxyphenyltriazine-based compound, cyclic iminoester-based compound or cyanoacrylate-based compound; a flame retardant, such as halogen-based compound (bromine compound or chlorine compound), antimony compound, magnesium hydroxide, aluminum hydroxide, phosphoric acid ester, condensed phosphoric acid ester, inorganic phosphorous flame retardant or phosphazene compound; an antidripping agent; an inorganic filler, such as calcium carbonate, mica, sericite, illite, kaolinite, montmorillonite, boehmite, smectite, vermiculite, talc or silica; and a dispersant. The resin composition may contain at least one of these additives.

The content of the other additives, which are additives that may be used in the present invention except for the above essential components, is not particularly limited unless it impairs the preferred physical properties of the present invention. Normally, the content of the other additives is, in a total amount of 100% by mass of the resin composition, preferably 10% by mass or less and more preferably 5% by mass or less.

### (Method for Producing Resin Composition)

The resin composition can be produced by mixing and heating (particularly, melt-kneading) the polyamide resin, the fibrous reinforcing material, the polyamide-based elastomer, and, as necessary, the non-fibrous titanate compound particles and the other additives.

For melt-kneading, any known melt kneader, for example, a biaxial extruder, can be used. Specifically, the resin composition can be produced by: (1) a method of preliminarily mixing the components with a mixer (a tumbler, a Henschel mixer or the like), melt-kneading the mixture with a melt kneader, and then pelletizing it with a pelletization device (such as a pelletizer); (2) a method of controlling a master batch of desired components, mixing it with other components as necessary, and melt-kneading the mixture into pellets with a melt kneader; (3) a method of feeding the components into a melt kneader to form pellets; or other methods.

There is no particular limitation as to the processing temperature during melt kneading so long as it is within a temperature range in which the polyamide resin can melt. Normally, the cylinder temperature of a melt kneader for use in the melt kneading is adjusted within this range. Thus, the resin composition that can exhibit desired effects and is for use in the present invention is produced.

### <Sliding Member and Use Thereof>

The sliding member according to the present invention can be produced by giving the above resin composition a shape according to the type, use, shape, and others of a desired member by a known resin molding method, such as injection molding, insert molding, compression molding, blow molding or inflation molding. Alternatively, a molding method composed of any combination of the above molding methods may be employed.

The sliding member according to the present invention can be suitably used, without having to subject the sliding surface to a surface treatment (such as plating or metallic painting), as a sliding member that is required to have a high coefficient of friction, and can be suitably used, for example, as a thrust member (a bush or a friction material) for a torque fluctuation absorber having a hysteresis generation mechanism. The thrust member is preferably an annular member.

The torque fluctuation absorber is disposed in a power transmission path between a power source, such as an engine or an electric motor, and a gearbox and an example is a torque fluctuation absorber that includes: a first rotating member; a second rotating member disposed coaxially with the first rotating member; a control plate disposed between the first rotating member and the second rotating member in an axial direction to engage non-rotatably with the second rotating member; a thrust member disposed between the first rotating member and the control plate in an axial direction to engage non-rotatably and axially movably with the first rotating member and abut slidably on the control plate; and an elastic member disposed between the first rotating member and the thrust member in an axial direction to be supported by the first rotating member and press the thrust member against the control plate.

The sliding surfaces of the thrust member and the control plate may be formed into respective predetermined shapes so that when torsion occurs between the thrust member and the control plate, the thrust member is axially displaced relative to the control plate to change the pressing load of the elastic member and thus change the hysteresis value generated between the thrust member and the control plate.

The sliding member according to the present invention can be suitably used as an annular member for use in slidable abutment with an annular mating member, such as a control plate in such a torque fluctuation absorber as described above, i.e., as a thrust member (such as a thrust washer or a thrust bearing). Examples

Hereinafter, a detailed description will be given of the present invention with reference to working examples and comparative examples, but the present invention is not at all limited to these examples. Specific raw materials used in the working examples and comparative examples are as follows.

PA resin: polyamide 66 resin (trade name: Zytel 45HSB, manufactured by DuPont)

Reinforcing material A: pitch-based carbon fibers with a tensile modulus of elasticity of 630 GPa, an average fiber length of 6 mm, and an average fiber diameter of 11 µm (trade name: DIALEAD K6371T, manufactured by Mitsubishi Rayon Co., Ltd.)

Reinforcing material B: PAN-based carbon fibers with a tensile modulus of elasticity of 235 GPa, an average fiber length of 6 mm, and an average fiber diameter of 7 µm (trade name: Besfight HTA-C6-05, manufactured by Toho Tenax Co., Ltd.)

Reinforcing material C: pitch-based carbon fibers with a tensile modulus of elasticity of 185 GPa, an average fiber length of 6 mm, and an average fiber diameter of 11 µm (trade name: DIALEAD K223SE, manufactured by Mitsubishi Rayon Co., Ltd.)

Reinforcing material D: glass fibers with a tensile modulus of elasticity of 85 GPa, an average fiber length of 3 mm, and an average fiber diameter of 13 µm (trade name: T-249, manufactured by Nippon Electric Glass Co., Ltd.)

Elastomer A: polyamide-based elastomer with a melting point of 164°C (trade name: UBESTA 9068X1, manufactured by Ube Industries, Ltd.)

Elastomer B: polyester-based elastomer with a melting point of 169°C (trade name: PRIMALLOY A-1900, manufactured by Mitsubishi Chemical Corporation)

Non-fibrous metal titanate compound: aluminum titanate with an average fiber diameter of 345 µm (trade name: TA-3, manufactured by Marusu Glaze Co., Ltd.)

### <Examples 1 to 2 and Comparative Examples 1 to 6>

A PA resin (polyamide resin), a reinforcing material, an elastomer, and a non-fibrous metal titanate compound were melt-kneaded in each composition ratio shown in Table 1 using a biaxial extruder, thus producing pellets. The cylinder temperature of the biaxial extruder was 285°C.

The obtained pellets were injection molded to produce a JIS test piece (bending test piece) and a friction and wear test piece (a hollow cylinder with an outer diameter of 25.6 mm, an inner diameter of 20 mm, and a height of 15 mm). The cylinder temperature of the injection molding machine was 310°C and the mold temperature thereof was 80°C.

### <Evaluation Methods>

### Bending Strength and Bending Modulus of Elasticity

The bending test pieces produced in the above manner underwent a 60 mm-span three-point bending test with a tester Autograph AG-5000 (manufactured by Shimadzu Corporation) in conformity with JIS K 7171 to measure their bending strengths and bending moduli of elasticity. The results are shown in Table 1.

### Friction and Wear Test

Each of the friction and wear test pieces produced in the above manner was measured in terms of specific wear volume, average value of coefficients of friction (average value through the test), and specific wear volume of a mating member with a Suzuki-type friction and wear tester (EFM-III-F, manufactured by A&D Company, Limited) in conformity with the A method of JIS K 7218. Furthermore, the difference between the maximum coefficient of friction and the minimum coefficient of friction during a period from an hour after the test start to nine hours after the test start was defined as an amplitude of the coefficients of friction. The test results are shown in Table 1. The test was conducted under the conditions of a surface pressure of 0.8 MPa, a peripheral velocity of 0.16 m/s, a running distance of 5.33 km, and a mating member S45C (polishing of the sliding surface with #800 abrasive paper).

**[Table 1]**

| | | Ex. 1 | Ex. 2 | Comp. Ex. 1 | Comp. Ex. | 2 Comp. Ex. | 3 Comp. Ex. | 4 Comp. Ex. | 5 Comp. Ex. 6 |
|---|---|---|---|---|---|---|---|---|---|
| Content (% by weight) | PA resin | 82 | 85 | 85 | 85 | 85 | 85 | 90 | 87 |
| | Reinforcing material A | | | 10 | | | | | |
| | Reinforcing material B | 10 | 10 | | | | 10 | 10 | 10 |
| | Reinforcing material C | | | | 10 | | | | |
| | Reinforcing material D | | | | | 10 | | | |
| | Elastomer A | 5 | 5 | 5 | 5 | 5 | | | |
| | Elastomer B | | | | | | 5 | | |
| | Non-fibrous metal titanate compound | 3 | | | | | | | 3 |
| Evaluations | Average value of coefficients of friction | 0.53 | 0.42 | 1.20 | 0.61 | 0.67 | 0.45 | 0.51 | 0.58 |
| | Amplitude of coefficients of friction | 0.07 | 0.08 | 1.02 | 0.39 | 0.99 | 0.71 | 0.81 | 0.17 |
| | Specific wear volume (10⁻¹mm³/N·km) | 0.04 | 0.05 | 0.08 | 0.12 | 0.18 | 0.12 | 0.05 | 0.08 |
| | Mating member specific wear volume (10⁻¹mm³/N·km) | 0.00 | 0.00 | 0.00 | 0.00 | 0.00 | 0.00 | 0.00 | 0.00 |
| | Bending strength (MPa) | 191 | 191 | 137 | 164 | 151 | 153 | 198 | 196 |
| | Bending modulus of elasticity (GPa) | 6.6 | 6.1 | 5.0 | 3.9 | 3.8 | 5.9 | 5.9 | 6.0 |

## Claims

1. A sliding member molded from a resin composition, the resin composition containing: a polyamide resin; a fibrous reinforcing material; and a polyamide-based elastomer, wherein the fibrous reinforcing material has a tensile modulus of elasticity of 190 GPa to 300 GPa,
wherein the fibrous reinforcing material consists of polyacrylonitrile-based carbon fibers, a content of the fibrous reinforcing material in a total amount of 100% by mass of the resin composition is 5% by mass to 20% by mass, and a content of the polyamide-based elastomer in a total amount of 100% by mass of the resin composition is 3% by mass to 10% by mass.

2. The sliding member according to claim 1, wherein the fibrous reinforcing material has an average fiber length of 0.1 mm to 10 mm and an average fiber diameter of 0.5 µm to 30 µm.

3. The sliding member according to any one of claims 1 or 2, wherein the resin composition further contains non-fibrous titanate compound particles.

4. The sliding member according to claim 3, wherein a content of the non-fibrous titanate compound particles in a total amount of 100% by mass of the resin composition is 1% by mass to 10% by mass.

5. The sliding member according to any one of claims 1 to 4, having a coefficient of friction, measured according to method A of JIS K 7218, of 0.40 or more against carbon steel S45C under conditions of a surface pressure of 0.8 MPa and a peripheral velocity of 0.16 m/s.

6. The sliding member according to any one of claims 1 to 5, being an annular member for use in slidable abutment with an annular mating member.

## Patentansprüche

1. Aus einer Harzzusammensetzung geformtes Gleitelement, wobei die Harzzusammensetzung enthält: ein Polyamidharz; ein faserförmiges Verstärkungsmaterial; und ein Elastomer auf Polyamidbasis, wobei das faserförmige Verstärkungsmaterial einen Zugelastizitätsmodul von 190 GPa bis 300 GPa aufweist,
wobei das faserförmige Verstärkungsmaterial aus Kohlenstofffasern auf Polyacrylnitrilbasis besteht, der Gehalt des faserförmigen Verstärkungsmaterials in einer Gesamtmenge von 100 Masse-% der Harzzusammensetzung 5 Masse-% bis 20 Masse-% beträgt und der Gehalt des Elastomers auf Polyamidbasis in einer Gesamtmenge von 100 Masse-% der Harzzusammensetzung 3 Masse-% bis 10 Masse-% beträgt.

2. Gleitelement nach Anspruch 1, wobei das faserförmige Verstärkungsmaterial eine durchschnittliche Faserlänge von 0,1 mm bis 10 mm und einen durchschnittlichen Faserdurchmesser von 0,5 µm bis 30 µm aufweist.

3. Gleitelement nach einem der Ansprüche 1 oder 2, wobei die Harzzusammensetzung ferner nichtfaserige Titanatverbindungspartikel enthält.

4. Gleitelement nach Anspruch 3, wobei der Gehalt an nichtfaserigen Titanatverbindungspartikeln in einer Gesamtmenge von 100 Masse-% der Harzzusammensetzung 1 Masse-% bis 10 Masse-% beträgt.

5. Gleitelement nach einem der Ansprüche 1 bis 4, mit einem Reibungskoeffizienten, gemessen nach Verfahren A der JIS K 7218, von 0,40 oder mehr gegenüber Kohlenstoffstahl S45C unter den Bedingungen eines Oberflächendrucks von 0,8 MPa und einer Umfangsgeschwindigkeit von 0,16 m/s.

6. Gleitelement nach einem der Ansprüche 1 bis 5, das ein ringförmiges Element zur Verwendung in einer verschiebbaren Verbindung mit einem ringförmigen Gegenelement ist.

## Revendications

1. Élément coulissant moulé à partir d'une composition de résine, la composition de résine contenant : une résine de polyamide ; un matériau de renfort fibreux ; et un élastomère à base de polyamide, dans lequel le matériau de renfort fibreux a un module d'élasticité en traction de 190 GPa à 300 GPa,
dans lequel le matériau de renfort fibreux est constitué de fibres de carbone à base de polyacrylonitrile, une teneur en matériau de renfort fibreux dans une quantité totale de 100 % en masse de la composition de résine est de 5 % en masse à 20 % en masse, et une teneur en élastomère à base de polyamide dans une quantité totale de 100 % en masse de la composition de résine est de 3 % en masse à 10 % en masse.

2. Élément coulissant selon la revendication 1, dans lequel le matériau de renfort fibreux a une longueur de fibre moyenne de 0,1 mm à 10 mm et un diamètre de fibre moyen de 0,5 µm à 30 µm.

3. Élément coulissant selon l'une quelconque des revendications 1 ou 2, dans lequel la composition de résine contient en outre des particules non fibreuses de composé titanate.

4. Élément coulissant selon la revendication 3, dans lequel une teneur en particules non fibreuses de composé titanate dans une quantité totale de 100 % en masse de la composition de résine est de 1 % en masse à 10 % en masse.

5. Élément coulissant selon l'une quelconque des revendications 1 à 4, ayant un coefficient de frottement, mesuré d'après la méthode A de la norme JIS K 7218, de 0,40 ou plus par rapport à l'acier au carbone S45C dans des conditions de pression en surface de 0,8 MPa et de vitesse périphérique de 0,16 m/s.

6. Élément coulissant selon l'une quelconque des revendications 1 à 5, qui est un élément annulaire destiné à être utilisé en butée coulissante avec un élément d'appariement annulaire.
